# EUROPEAN PATENT SPECIFICATION

(11) **EP 3 828 371 B1**
(45) Date of publication and mention of the grant of the patent: **03.07.2024**
(21) Application number: 19211656.4
(22) Date of filing: 26.11.2019
(51) Int. Cl.: E05F 15/622, F16D 3/16, F16H 25/20

(54) **DRIVE DEVICE**
ANTRIEBSVORRICHTUNG
DISPOSITIF D'ENTRAÎNEMENT

(43) Date of publication of application: 02.06.2021
(73) Proprietor: Edscha Engineering GmbH, 42855 Remscheid (DE)
(72) Inventor: Gutierrez-Fernandez, Jose-Manuel, 39718 Cantabria (ES)
(74) Representative: IPrime Bonnekamp Sparing Patentanwaltsgesellschaft mbH

(56) References cited:
- WO-A1-2019/201509
- DE-A1-102018 201 840
- US-A- 3 069 924
- US-A- 3 202 414

## Description

The invention relates to a drive device, particularly for driving a flap, according to the preamble of claim 1.

From practice drive devices are known which are used to automatically open or close a flap of a vehicle, for example a front door which is pivotally attached to the A pillar of a car. Typically such drive devices are designed as linear drive devices wherein a first end of the linear drive device is pivotally attached to the vehicle body and a second end of the linear drive device is pivotally attached to the flap of the vehicle. Mostly such drive devices are designed as spindle drives having a spindle and a spindle nut wherein the spindle nut is threadingly engaged with the spindle. One first end of the spindle is pivotally attached to an A pillar of a vehicle and an actuator housing enclosing the spindle nut is attached to a door of the vehicle. By rotating one of the spindle and the spindle nut around a spindle axis defined by the spindle, the actuator housing is moved along the spindle in the direction of the spindle axis so that an axial load is transmitted to the vehicle door which in turn leads to a pivotal movement of the door in a closing or opening direction.

WO 2019/201509 A1 discloses a drive device comprising an actuator housing with an open cavity. The drive device further comprises an actuator assembly enclosed at least in part by the actuator housing, wherein the actuator assembly comprises a spindle extending through the actuator housing defining a spindle axis. The actuator assembly further comprises a spindle nut being configured as a gear wheel wherein the spindle extends through and engages with an internal thread of the spindle nut. The drive device further comprises a drive assembly configured as an electric motor to drive the actuator assembly. Further a bearing assembly is comprised, wherein the bearing assembly comprises a first bearing element and a second bearing element which allow the spindle nut to rotate around a first rotation axis and around a second rotation axis. The first rotation axis and the second rotation axis are perpendicular to each other and the spindle axis, wherein the first end of the spindle nut is connected to the first bearing element and an outer surface of the first bearing element facing away from the spindle nut slidingly abuts against an inner wall of the open cavity. A worm wheel is connected to an end of a driving shaft of the drive assembly, wherein the worm wheel engages with an outer thread of the spindle nut for coupling the drive assembly to the actuator assembly.

US 3 069 924 A discloses a spindle drive comprising a spindle housing having a first housing part and a second housing part connected to each other. The spindle housing has an open cavity in which an actuator assembly at least in part is enclosed. The actuator assembly comprises a spindle extending through the spindle housing and defining a spindle axis and a spindle nut, wherein the spindle extends through and engages with the spindle nut. The spindle nut is supported in a spherical inner surface of the spindle housing such that the spindle nut may rotate around a first rotation axis being perpendicular to the spindle axis. The spindle drive further comprises a drive assembly comprising a worm to drive the spindle nut around the spindle axis. The worm wheel supported by the spindle housing is arranged between the spindle nut and the worm for coupling the drive assembly to the spindle drive.

US 3 202 414 A discloses a drive device for driving a flap comprising an actuator assembly, wherein the actuator assembly comprises a spindle defining a spindle axis, wherein the spindle is connectable to a vehicle body and a spindle nut, wherein the spindle extends through and engages with the spindle nut. The drive device further comprises a drive assembly to drive the actuator assembly, in particular the spindle. The drive device further comprises a bearing assembly designed as a ball bearing allowing the spindle nut to rotate around the spindle axis.

DE 10 2018 201 840 A1 discloses a drive device for driving a flap comprising an actuator housing with an open cavity, wherein an actuator assembly is enclosed at least in part by the actuator housing, wherein the actuator assembly comprises a spindle extending through the actuator housing and defining a spindle axis, wherein the spindle extends through and engages with a spindle nut. Further the drive device comprises a drive assembly to drive the actuator assembly. The spindle nut is designed as a sphere being rotatably supported inside the actuator housing allowing the spindle nut to rotate around a first rotation axis, wherein the first rotation axis is perpendicular to the spindle axis. The drive device further comprises a bearing assembly comprising the spindle nut having a spherical outer surface and a spur gear having a pin on its inner circumference engaging with a slit on the outer surface of spindle nut allowing the spindle nut to rotate around the first axis perpendicular to the spindle axis.

EP 0 803 631 A1 describes a drive device for actuating components pivotally attached on one side, comprising an actuator housing partly enclosing an open cavity. An actuator assembly is positioned inside the actuator housing wherein the actuator assembly comprises a spindle extending through the actuator housing and defining a spindle axis wherein the spindle is connectable to a component pivotally attached on one side. The actuator assembly further comprises a spindle nut wherein the spindle extends through and threadingly engages with the spindle nut. The known drive device further comprises a drive assembly with a motor for driving the actuator assembly and a bearing assembly which bearing assembly allows the spindle nut to rotate within the actuator housing around a first rotation axis and around a second rotation axis wherein the first rotation axis and the second rotation axis are perpendicular to each other and are perpendicular to the spindle axis. In a shown embodiment the spindle nut is designed as a worm gear threadingly engaged with the spindle and having spherical outer surfaces that slidingly abut against spherical inner surfaces of a bearing bush. The bearing bush abuts non-rotatably against an inner wall of the actuator housing. In another shown embodiment of a drive device the spindle nut is shaped as a rotating calotte wherein the spherical outer surfaces of the spindle nut slidingly abut against an inner spherically shaped wall of a worm wheel comprised of two separate worm wheel halves. Outer studs projecting from an outer surface of the spindle nut are engaged with inner grooves of the worm wheel so that a rotation of the worm wheel around the spindle axis is transferred to the spindle nut to drive its rotation around the spindle axis. The known drive device comprises a bearing bush positioned between an outer cylindrical surface of the worm wheel and an inner wall of the actuator housing. Disadvantageously the shown drive devices comprise rather large spindle nuts having a complicated shape which leads to a need of larger installation space inside the actuator housing. Also the bearing assemblies to enable the spindle nut to rotate around a first and second rotation axis perpendicular to each other and to the spindle axis are statically positioned inside the actuator housing which may lead to a non-sufficient supporting of the spindle nut.

It is the object of the invention to provide a drive device that is more flexible in terms of use in any kinematic of a door and has a compact size.

The above object is achieved by a drive device according to claim 1.

According to a first aspect of the invention a drive device, in particular to drive a flap, is created wherein the drive device comprises an actuator housing with an open cavity, wherein the actuator housing is connectable to one of a flap and a vehicle body. The inventive drive device further comprises an actuator assembly enclosed at least in part by the actuator housing, wherein the actuator assembly comprises a spindle extending through the actuator housing and defining a spindle axis and a spindle nut, wherein the spindle is connectable to the other one of the door and the vehicle body and the spindle extends through and engages with the spindle nut. Further the inventive drive device comprises a drive assembly to drive the actuator assembly and a bearing assembly comprising a first bearing element which allows the spindle nut to rotate around a first rotation axis and around a second rotation axis, wherein the first rotation axis and the second rotation axis are perpendicular to each other and are perpendicular to the spindle axis. A first end of the spindle nut is connected to the first bearing element, wherein an outer surface of the first bearing element facing away from the spindle nut slidingly abuts against an inner wall of the open cavity. The drive device further comprises a coupling assembly being mounted inside the actuator housing for coupling the drive assembly to the actuator assembly, wherein the coupling assembly comprises a first coupling element and is supported by the bearing assembly. The coupling assembly transfers a rotational movement induced by the drive assembly to the spindle nut to drive a rotation of the spindle nut around the spindle axis. The coupling assembly has on an outer surface at least one projection. The projection on the outer surface of the coupling assembly advantageously is coupled with a gear element being operatively connected to the drive assembly, wherein the first coupling element is coupled to the gear element. Further advantageously the spindle nut is supported directly by the first bearing element which leads to a better and more reliable support for the spindle nut while enabling it to rotate around the first rotation axis and the second rotation axis to compensate misalignments between the vehicle body, in particular the A pillar and the door without inducing flexural moments on any of the parts of the drive device. The bearing assembly hence allows the spindle actuator assembly to move to its natural position and transmit an opening load to the A pillar. The inventive drive device is characterised in that the coupling assembly comprises a second coupling element wherein the first coupling element and the second coupling element enclose a clutch assembly. Advantageously the clutch assembly can decouple the drive assembly from the actuator assembly in case an outer force acts on the drive device to protect the drive assembly and/or the actuator assembly from damage caused by excessive axial loads. Such excessive axial loads may for example occur when the user manually pushes or pulls the door in the closing or opening direction.

In a preferred embodiment the bearing assembly comprises a second bearing element. Advantageously the bearing assembly can be fitted more easily within the drive device and lower maintenance costs can be achieved as. Preferably the first bearing element and the second bearing element each have a shape of a hollow part-sphere wherein outer surfaces of each of the first bearing element and the second bearing element slidingly abut against an inner wall of the open cavity of the actuator housing. The inner wall of the open cavity suitably also has a shape of an inner wall of a hollow part-sphere to be able to provide a proper bearing surface against which the first bearing element and the second bearing element can slidingly abut against.

In a preferred development the spindle nut is coupled to the bearing assembly to enable the spindle nut to rotate around the first rotation axis and the second rotation axis. Particularly preferably a second end of the spindle nut is engaged with the second bearing element of the bearing assembly to enable the spindle nut to rotate around the first rotation axis and the second rotation axis. In an advantageous development the first bearing element has a first central opening in which the first end of the spindle nut is supported.

In a further development the second bearing element has a second central opening in which the second end of the spindle nut is supported. Most preferably the spindle nut is supported within the central openings of the first bearing element and the second bearing element such that the spindle nut can rotate around the spindle axis. Advantageously the spindle nut is able to rotate around each of the spindle axis, the first rotation axis and the second rotation axis.

Preferably the spindle nut is supported concentrically to the spindle axis of the spindle by the bearing elements of the bearing assembly to transmit the axial load from the spindle nut to the bearing assembly. Advantageously the rotation of the spindle nut around the first rotation axis and the second rotation axis is facilitated while an axial load moving the spindle nut along the spindle axis is transmitted to the actuator housing via the bearing assembly.

In an advantageous development the coupling assembly is coupled to the bearing assembly such that the coupling assembly can rotate around the first rotation axis and the second rotation axis. As the spindle nut is also coupled to the bearing assembly the spindle nut and the coupling assembly can advantageously rotate around the first rotation axis and the second rotation axis together. Advantageously the position of the coupling assembly relative to the spindle nut during rotation around the first rotation axis and the second rotation axis is fixed in terms of rotation around the first rotation axis and the second rotation axis.

Preferably the gear element is designed as an external gear having an external toothing and an inner ring surface having at least a first groove. In a further development the projection of the coupling assembly projects into the first groove of the gear element to transmit a rotational movement of the gear element to the coupling assembly.

Preferably the at least one projection on the outer surface of the coupling assembly is shaped such that the coupling assembly can rotate around the first rotation axis and the second rotation axis. Advantageously a positive connection between the coupling assembly and the gear element is established which provides a reliable force transmission of a rotational movement of the gear element around the spindle axis to the coupling assembly yet allowing the coupling assembly to additionally rotate around the first rotation axis and the second rotation axis.

Preferably the clutch assembly is designed as a friction clutch. The clutch assembly comprises advantageously at least a first friction ring being non-rotatably connected to the coupling assembly and a second friction ring being non-rotatably connected to the spindle nut. In a further development the clutch assembly comprises a biasing means for biasing the first friction ring against the second friction ring. Preferably the biasing means is designed as a coil spring having a first spring end and a second spring end wherein the first spring end abuts against the coupling assembly and the second spring end abuts against the first friction ring. More preferably the first spring end abuts against the inner wall of the second coupling element. Advantageously the clutch assembly can be contained inside the coupling assembly enabling it to decouple the drive assembly from the actuator assembly while minimising the needed installation space inside the actuator housing.

Further advantages, embodiments and features of the invention follow from the description below of a preferred embodiment and from the dependent claims.

The invention is explained in more detail with reference to the attached figures of a preferred embodiment of the invention.
- Fig. 1: shows a preferred embodiment a drive device according to the invention in a cross-sectional sideview.
- Fig. 2: shows an enlarged view of the actuator assembly 8, the bearing assembly 11 and the coupling assembly 14 of the drive device 1 shown in fig. 1.
- Fig. 3: shows the preferred embodiment of a drive device according to the invention from fig. 1 in a cross-sectional front view.

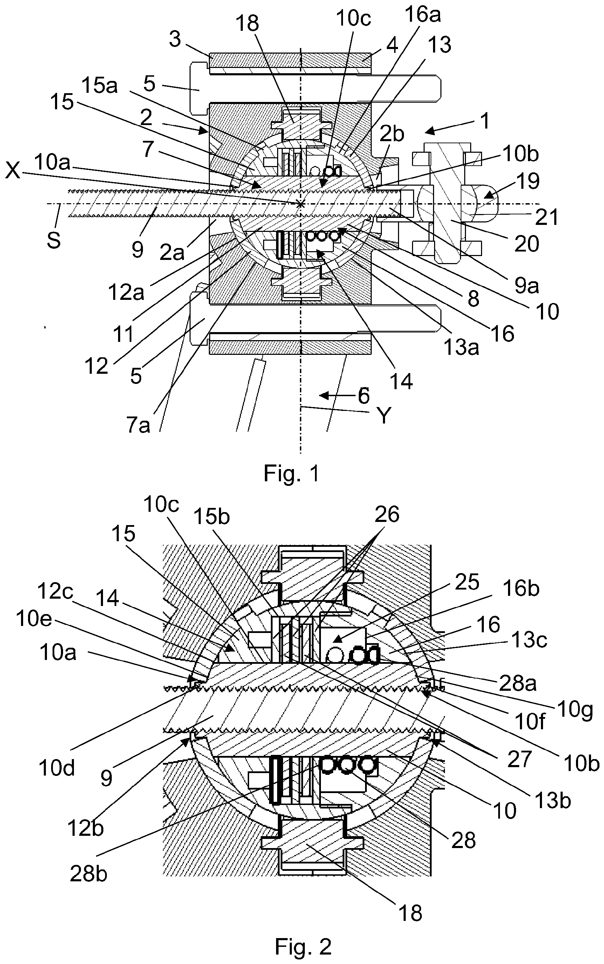

Fig. 1 shows a preferred embodiment of a drive device 1 according to the invention in a cross-sectional sideview. The drive device 1 comprises an actuator housing 2 comprised of a first housing part 3 and a second housing part 4. The first housing part 3 and the second housing part 4 are connected to each other to form the actuator housing 2 by means of two mounting bolts 5. The actuator housing 2 is mounteable to a flap also using the mounting bolts 5. As a consequence the actuator housing 2 moves along with the flap in particular during a pivotal movement of the flap. The drive device further comprises a drive assembly 6 connected to the actuator housing 2.

The actuator housing 2 has a first opening 2a and a second opening 2b positioned opposite the first opening 2a, wherein an open cavity 7 is disposed between the first opening 2a and the second opening 2b. The open cavity 7 comprises a spherical inner wall 7a. Within the open cavity 7 at least part of an actuator assembly 8 is disposed. The actuator assembly 8 comprises a spindle 9 extending through the actuator housing 2 and defining a spindle axis S.

The spindle 9 traverses the first opening 2a and the second opening 2b of the actuator housing 2 wherein the first opening 2a and the second opening 2b each have an inner diameter that is larger than the outer diameter of the spindle 9. Advantageously the spindle 9 can rotate around a first rotation axis X perpendicular to the sketching plane and a second rotation axis Y within a certain angular range without touching the first opening 2a or the second opening 2b. The first rotation axis X and the second rotation axis Y are perpendicular to each other and are also perpendicular to the spindle axis S.

The first opening 2a of the actuator housing 2 has a conical shape wherein the inner diameter of the cone decreases in the direction towards the open cavity 7. The second opening 2b also has a conical shape with a step separating two cones wherein the inner diameter of the cones each decrease in the direction towards the open cavity 7. Advantageously the first opening 2a and the second opening 2b provide a stopping surface for the spindle 9 to limit the range of the angles for the first rotation axis X and the second rotation axis Y around which the spindle 9 can rotate about.

The actuator assembly 8 further comprises a spindle nut 10 positioned in the open cavity 7 of the actuator housing 2. The spindle nut 10 is threadingly engaged on the spindle 9 and can rotate around the spindle axis S. By rotating the spindle nut 10 around spindle axis S the spindle nut 10 is moved along the spindle axis S to drive a transversal movement of the actuator housing 2 along the spindle axis S.

The spindle nut 10 is supported by a bearing assembly 11 which allows the spindle nut 10 together with the spindle 9 to rotate around the first rotation axis X and the second rotation axis Y. The bearing assembly 11 comprises a first bearing element 12 and a second bearing element 13. The first bearing element 12 and the second bearing element 13 each have a shape of a hollow part-sphere wherein an outer surface 12a of the first bearing element 12 and an outer surface 13a of the second bearing element 13 respectively abut slidingly against the inner wall 7a of the open cavity 7 of the actuator housing 2.

The spindle nut 10 has a first end 10a and a second end 10b and a main section 10c positioned between the first end 10a and the second end 10b. The first end 10a of the spindle is connected to the first bearing element 12 and the second end 10b of the spindle nut 10 is connected to the second bearing element 13. Advantageously the spindle nut 10 can rotate around the spindle axis S relative to the first bearing element 12 and the second bearing element 13 and additionally around the first rotation axis X and the second rotation axis Y together with the first bearing element 12 and the second bearing element 13.

The drive device further comprises a coupling assembly 14. The coupling assembly 14 serves as a means to drive a rotation of the spindle nut 10 around the spindle axis S to move the actuator housing 2 along the spindle axis S and a pivotal movement of the flap.

The coupling assembly 14 is mounted inside the actuator housing 2 and comprises a first coupling element 15 and a second coupling element 16. The first coupling element 15 as well as the second coupling element 16 have a shape of a part-sphere wherein the first coupling element 15 and the second coupling element 16 together form a hollow sphere.

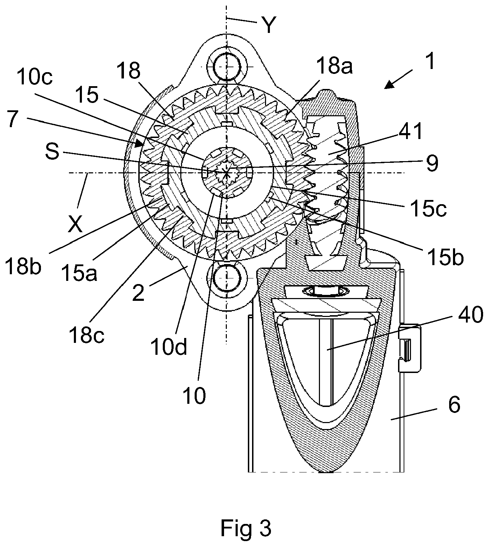

The first coupling element 15 and the second coupling element 16 have on their outer surface a number of projections 15a, 16a wherein the projections 15a, 16a have a conical shape and are partly engaged with a crown wheel 18 wherein the crown wheel 18 is operatively connected to the drive assembly 6 (shown in fig. 3 below).

A first end 9a of the spindle 9 is connected to a rotation connector 19. The rotation connector 19 is pivotally attacheable to an A pillar via a pivot pin 20 wherein the pivot pin 20 traverses a ball joint 21. The ball joint 21 allows the spindle 9 to rotate around the first rotation axis X and the second rotation axis Y while preventing the spindle 9 from rotating around the spindle axis S.

Advantageously the rotation connector 19 ensures that an axial load induced by a rotation of the spindle nut 10 along the spindle axis S is reliably transferred to the actuator housing 2 while at the same time allowing the spindle 9 to move to its natural position in the case of misalignment between the A pillar and a vehicle door attached to the actuator housing 2.

Fig. 2 shows an enlarged view of the actuator assembly 8, the bearing assembly 11 and the coupling assembly 14 of the drive device 1 shown in fig. 1. The coupling assembly 14 encloses a clutch assembly 30. The clutch assembly 25 is designed as a friction clutch which is positioned within the hollow sphere formed by the first coupling element 15 and the second coupling element 16.

The clutch assembly 25 comprises three first friction rings 26 which are non-rotatably connected to and protruding perpendicularly from an inner wall 15b of the first coupling element 15. Further the clutch assembly 25 comprises two second friction rings 27 positioned between the three first friction rings 26. The two second friction rings 27 are non-rotatably connected to and protruding perpendicularly from an outer periphery of the main section 10c of the spindle nut 10.

The clutch assembly 25 further comprises a biasing means 28 designed as a coil spring having a first spring end 28a and a second spring end 28b wherein the first spring end 28a abuts against a stepped inner wall 16b of the second coupling element 16 and the second spring end 28b abuts against the outer first friction ring 26 of the clutch assembly 25. Advantageously the clutch assembly 25 transfers the rotational movement of the first coupling element 15 around the spindle axis S to the spindle nut 10 up to an upper threshold value of torque. The rotation of the first coupling element 15 is driven by the crown wheel 18 operatively connected to the first coupling element 15 via the projections 15a.

In the enlarged view shown in Fig. 2 it can be seen that a protruding section 10d of the first end 10a is rotatably supported within a central opening 12b of the first bearing element 12. The first end 10a of the spindle nut 10 further has a first hemispherically shaped section 10e positioned between the main section 10c and the protruding section 10d of the first end 10a which hemispherically shaped section 10e abuts against an hemispherically shaped inner wall 12c of the first bearing element 12.

Further a protruding section 10f of the second end 10b is supported within a second central opening 13b of the second bearing element 13. The second end 10b of the spindle nut 10 further has a second hemispherically shaped section 10g positioned between the main section 10c and the protruding section 10f of the second end 10b which hemispherically shaped section 10g abuts against the second bearing element 13.

Fig. 3 shows the preferred embodiment of a drive device 1 according to the invention from fig. 1 in a cross-sectional front view. In this view the drive assembly 6 is shown in more detail wherein it can be seen that the drive assembly 6 is designed as a motor having a primary drive shaft 40 at which end a worm shaft 41 is fixed. The toothing of worm shaft 41 is threadingly engaged with an outer toothing 18a of the crown wheel 18 which crown wheel 18 is enclosed inside the actuator housing 2. The side wall of the actuator housing 2 has a suitable cutout on the side where the drive assembly 6 is mounted to enable the toothing of worm shaft 41 to threadingly engage with the outer toothing 18a of the crown wheel 18.

In fig. 3 one can see that the first coupling element 15 is connected to the crown wheel 18 by means of the projections 15a positioned along an outer periphery of the coupling element 15 which projections 15a project into inner grooves 18b of the crown wheel 18. The inner grooves 18b are positioned along an inner wall 18c of the crown wheel 18.

Further the first coupling element 15 comprises inner grooves 15b on its inner wall 15c. The inner grooves 15b extend along a direction parallel to the spindle axis S which is perpendicular to the sketching plane and serve as a means to non-rotatably connect the first friction rings 26 of the clutch assembly 25 to the first coupling element 15. Advantageously the first friction rings 26 are axially displaceable along the spindle axis S of the spindle 9.

The spindle 9 is concentrically surrounded by the spindle nut 10 wherein the spindle nut 10 has on the outer surface of the main section 10c grooves 10d extending along a direction parallel to the spindle axis S. The grooves 10d serves as a means to non-rotatably connect the second friction rings 27 of the clutch assembly 25 to the spindle nut 10 yet allowing the second friction rings 27 to be axially displaced along the spindle axis S of the spindle 9.

## Claims

1. Drive device, in particular to drive a flap, comprising
an actuator housing (2) with an open cavity (7), wherein the actuator housing (2) is connectable to one of a flap and a vehicle body,
an actuator assembly (8) enclosed at least in part by the actuator housing (2), wherein the actuator assembly (8) comprises a spindle (9) extending through the actuator housing (2) and defining a spindle axis (S), wherein the spindle (9) is connectable to the other one of the door and the vehicle body, and a spindle nut (10), wherein the spindle (9) extends through and engages with the spindle nut (10),
a drive assembly (6) to drive the actuator assembly (8), a bearing assembly (11), which bearing assembly (11) comprises a first bearing element (12) which allows the spindle nut (10) to rotate around a first rotation axis (X) and around a second rotation axis (Y), wherein the first rotation axis (X) and the second rotation axis (Y) are perpendicular to each other and the spindle axis (S),
wherein a first end (10a) of the spindle nut (10) is connected to the first bearing element (12) and an outer surface (12a) of the first bearing element (12) facing away from the spindle nut (10) slidingly abuts against an inner wall (7a) of the open cavity (7), and
a coupling assembly (14) being mounted inside the actuator housing (2) for coupling the drive assembly (6) to the actuator assembly (8), wherein the coupling assembly comprises a first coupling element (24), wherein the coupling assembly (14) is supported by the bearing assembly (11),
**characterised in that**
the coupling assembly (14) has on an outer surface at least one projection (15a),
wherein the projection (15a) on the outer surface of the coupling assembly (14) is coupled with a gear element (18) being operatively connected to the drive assembly (6), and
wherein the first coupling element (15) is coupled to the gear element (18),
and **in that** the coupling assembly (14) comprises a second coupling element (16), wherein the first coupling element (15) and the second coupling element (16) surround a clutch assembly (25).

2. Drive device according to claim 1, wherein the bearing assembly (11) comprises a second bearing element (13).

3. Drive device according to claim 2, wherein the first bearing element (12) and the second bearing element (13) each have a shape of a hollow part-sphere, wherein outer surfaces (12a, 13a) of each of the first bearing element (12) and the second bearing element (13) slidingly abut against an inner wall (7a) of the open cavity (7) of the actuator housing.

4. Drive device according to claim 3, wherein the inner wall (7a) of the open cavity (7) has a shape of an inner wall of a hollow part-sphere.

5. Drive device according to one of claims 2 to 4, wherein a second end (10b) of the spindle nut (10) is connected to the second bearing element (13).

6. Drive device according to one of the preceding claims, wherein the first bearing element (12) has a first central opening (12b) in which the first end (10a) of the spindle nut (10) is supported.

7. Drive device according to one of the preceding claims, wherein the coupling assembly (14) is coupled to the bearing assembly (11) such that the coupling assembly (14) can rotate around the first rotation axis (X) and the second rotation axis (Y).

8. Drive device according to one of the preceding claims, wherein the gear element (18) is designed as an external gear having a toothing (18a) along its outer periphery and an inner surface (18c) having at least a first groove (18b).

9. Drive device according to claim 8, wherein the at least one projection (15a) of the coupling assembly (14) projects into the first groove (18b) of the gear element (18) to transmit a rotational movement of the gear element (18) to the coupling assembly (14).

10. Drive device according to claim 9, wherein the at least one projection (15a) on the outer surface of the coupling assembly (14) is shaped such that the coupling assembly (14) can rotate around the first rotation axis (X) and the second rotation axis (Y).

11. Drive device according to one of the preceding claims, wherein the clutch assembly (25) is designed as a friction clutch.

12. Drive device according to one of the preceding claims, wherein the clutch assembly (25) comprises at least a first friction ring (26) being non-rotatably connected to the coupling assembly (14) and a second friction ring (27) being non-rotatably connected to the spindle nut (10).

13. Drive device according to claim 12, wherein the clutch assembly (25) comprises a biasing means (28) for biasing the first friction ring (26) against the second friction ring (27).

14. Drive device according to claim 13, wherein the biasing means (28) is designed as a coil spring having a first spring end (28a) and a second spring end (28b), wherein the first spring end (28a) abuts against the coupling assembly (14) and the second spring end (28b) abuts against the first friction ring (26).

15. Drive device according to claim 14, wherein the first spring end (28a) abuts against an inner wall (16b) of the second coupling element (16):

## Patentansprüche

1. Antriebsvorrichtung, insbesondere zum Antrieb einer Klappe, mit
ein Aktuatorgehäuse (2) mit einem offenen Hohlraum (7), wobei das Aktuatorgehäuse (2) entweder mit einem von Fahrzeugklappe und Fahrzeugkarosserie verbindbar ist
eine Aktuatorbaugruppe (8), die zumindest teilweise von dem Aktuatorgehäuse (2) umgeben ist, wobei die Aktuatorbaugruppe (8) eine Spindel (9), die sich durch das Aktuatorgehäuse (2) erstreckt und eine Spindelachse (S) definiert, wobei die Spindel (9) entweder mit der Klappe oder mit der Fahrzeugkarosserie verbindbar ist, und eine Spindelmutter (10) umfasst, wobei sich die Spindel (9) durch die Spindelmutter (10) erstreckt und mit dieser in Eingriff steht,
eine Antriebsbaugruppe (6) zum Antreiben der Aktuatorbaugruppe (8),
eine Lagerbaugruppe (11), wobei die Lagerbaugruppe (11) ein erstes Lagerelement (12) umfasst, das es der Spindelmutter (10) ermöglicht, sich um eine erste Drehachse (X) und um eine zweite Drehachse (Y) zu drehen, wobei die erste Drehachse (X) und die zweite Drehachse (Y) senkrecht zueinander und zur Spindelachse (S) stehen, wobei ein erstes Ende (10a) der Spindelmutter (10) mit dem ersten Lagerelement (12) verbunden ist und eine von der Spindelmutter (10) abgewandte Außenfläche (12a) des ersten Lagerelements (12) gleitend an einer Innenwand (7a) des offenen Hohlraums (7) anliegt, und
eine Kupplungsbaugruppe (14), die innerhalb des Aktuatorgehäuses (2) montiert ist, um die Antriebsbaugruppe (6) mit der Aktuatorbaugruppe (8) zu koppeln, wobei die Kupplungsbaugruppe ein erstes Kupplungselement (24) umfasst, wobei die Kupplungsbaugruppe (14) von der Lagerbaugruppe (11) getragen wird,
wobei die Kupplungsbaugruppe (14) an einer Außenfläche mindestens einen Vorsprung (15a) aufweist,
**dadurch gekennzeichnet,**
**dass** der Vorsprung (15a) an der Außenfläche der Kupplungsbaugruppe (14) mit einem Getriebeelement (18) gekoppelt ist, das mit der Antriebsbaugruppe (6) in Wirkverbindung steht, und
wobei das erste Kupplungselement (15) mit dem Getriebeelement (18) gekoppelt ist,
und **dass**
**dass** die Kupplungsanordnung (14) ein zweites Kupplungselement (16) umfasst, wobei das erste Kupplungselement (15) und das zweite Kupplungselement (16) eine Kupplungsanordnung (25) umgeben.

2. Antriebsvorrichtung nach Anspruch 1, wobei die Lageranordnung (11) ein zweites Lagerelement (13) umfasst.

3. Antriebsvorrichtung nach Anspruch 2, wobei das erste Lagerelement (12) und das zweite Lagerelement (13) jeweils die Form einer hohlen Teilkugel haben, wobei Außenflächen (12a, 13a) des ersten Lagerelements (12) und des zweiten Lagerelements (13) jeweils gleitend an einer Innenwand (7a) des offenen Hohlraums (7) des Aktuatorgehäuses anliegen.

4. Antriebsvorrichtung nach Anspruch 3, wobei die Innenwand (7a) des offenen Hohlraums (7) die Form einer Innenwand einer hohlen Teilkugel hat.

5. Antriebsvorrichtung nach einem der Ansprüche 2 bis 4, wobei ein zweites Ende (10b) der Spindelmutter (10) mit dem zweiten Lagerelement (13) verbunden ist.

6. Antriebsvorrichtung nach einem der vorhergehenden Ansprüche, wobei das erste Lagerelement (12) eine erste zentrale Öffnung (12b) aufweist, in der das erste Ende (10a) der Spindelmutter (10) gelagert ist.

7. Antriebsvorrichtung nach einem der vorhergehenden Ansprüche, wobei die Kupplungsbaugruppe (14) mit der Lagerbaugruppe (11) derart gekoppelt ist, dass die Kupplungsbaugruppe (14) um die erste Drehachse (X) und die zweite Drehachse (Y) drehbar ist.

8. Antriebsvorrichtung nach einem der vorhergehenden Ansprüche, wobei das Getriebeelement (18) als Außenrad mit einer Verzahnung (18a) entlang seines Außenumfangs und einer Innenfläche (18c) mit mindestens einer ersten Nut (18b) ausgebildet ist.

9. Antriebsvorrichtung nach Anspruch 8, wobei der mindestens eine Vorsprung (15a) der Kupplungsanordnung (14) in die erste Nut (18b) des Getriebeelements (18) hineinragt, um eine Drehbewegung des Getriebeelements (18) auf die Kupplungsanordnung (14) zu übertragen.

10. Antriebsvorrichtung nach Anspruch 9, wobei der mindestens eine Vorsprung (15a) an der Außenfläche der Kupplungsbaugruppe (14) so geformt ist, dass sich die Kupplungsbaugruppe (14) um die erste Drehachse (X) und die zweite Drehachse (Y) drehen kann.

11. Antriebsvorrichtung nach einem der vorhergehenden Ansprüche, wobei die Kupplungsanordnung (25) als Reibungskupplung ausgebildet ist.

12. Antriebsvorrichtung nach einem der vorhergehenden Ansprüche, wobei die Kupplungsanordnung (25) mindestens einen ersten Reibring (26) aufweist, der drehfest mit der Kupplungsanordnung (14) verbunden ist, und einen zweiten Reibring (27), der drehfest mit der Spindelmutter (10) verbunden ist.

13. Antriebsvorrichtung nach Anspruch 12, wobei die Kupplungsanordnung (25) ein Vorspannmittel (28) zum Vorspannen des ersten Reibrings (26) gegen den zweiten Reibring (27) umfasst.

14. Antriebsvorrichtung nach Anspruch 13, wobei das Vorspannmittel (28) als Schraubenfeder mit einem ersten Federende (28a) und einem zweiten Federende (28b) ausgebildet ist, wobei das erste Federende (28a) an der Kupplungsanordnung (14) und das zweite Federende (28b) an dem ersten Reibring (26) anliegt.

15. Antriebsvorrichtung nach Anspruch 14, wobei das erste Federende (28a) an einer Innenwand (16b) des zweiten Kupplungselements (16) anliegt.

## Revendications

1. Dispositif d'entraînement, en particulier pour l'entraînement d'un volet, comprenant
un boîtier d'actionneur (2) avec une cavité ouverte (7), dans lequel le boîtier d'actionneur (2) peut être relié à l'un parmi un volet et une carrosserie de véhicule,
un ensemble actionneur (8) enfermé au moins en partie dans le boîtier d'actionneur (2), dans lequel l'ensemble actionneur (8) comprend une broche (9) s'étendant à travers le boîtier d'actionneur (2) et définissant un axe de broche (S), dans lequel la broche (9) peut être reliée à l'autre parmi la porte et la carrosserie de véhicule, et un écrou de broche (10), dans lequel la broche (9) s'étend à travers et entre en contact avec l'écrou de broche (10),
un ensemble d'entraînement (6) permettant d'entraîner l'ensemble actionneur (8),
un ensemble de roulement (11), lequel ensemble de roulement (11) comprend un premier élément de roulement (12) qui permet à l'écrou de broche (10) de tourner autour d'un premier axe de rotation (X) et autour d'un second axe de rotation (Y), dans lequel le premier axe de rotation (X) et le second axe de rotation (Y) sont perpendiculaires l'un à l'autre et à l'axe de broche (S),
dans lequel une première extrémité (10a) de l'écrou de broche (10) est reliée au premier élément de roulement (12) et une surface extérieure (12a) du premier élément de roulement (12) orientée à l'opposé de l'écrou de broche (10) s'appuie de manière coulissante contre une paroi intérieure (7a) de la cavité ouverte (7), et
un ensemble d'accouplement (14) étant monté à l'intérieur du boîtier d'actionneur (2) destiné à l'accouplement de l'ensemble d'entraînement (6) à l'ensemble actionneur (8), dans lequel l'ensemble d'accouplement comprend un premier élément d'accouplement (24), dans lequel l'ensemble d'accouplement (14) est supporté par l'ensemble de roulement (11),
**caractérisé en ce que**
l'ensemble d'accouplement (14) possède sur une surface extérieure au moins une saillie (15a),
dans lequel la saillie (15a) sur la surface extérieure de l'ensemble d'accouplement (14) est accouplée à un élément d'engrenage (18) étant relié de manière opérationnelle à l'ensemble d'entraînement (6), et dans lequel le premier élément d'accouplement (15) est accouplé à l'élément d'engrenage (18), et
et **en ce que** l'ensemble d'accouplement (14) comprend un second élément d'accouplement (16), dans lequel le premier élément d'accouplement (15) et le second élément d'accouplement (16) entourent un ensemble embrayage (25).

2. Dispositif d'entraînement selon la revendication 1, dans lequel l'ensemble de roulement (11) comprend un second élément de roulement (13).

3. Dispositif d'entraînement selon la revendication 2, dans lequel le premier élément de roulement (12) et le second élément de roulement (13) possèdent chacun la forme d'une sphère partielle creuse, dans lequel les surfaces extérieures (12a, 13a) de chacun parmi le premier élément de roulement (12) et le second élément de roulement (13) s'appuyent de manière coulissante contre une paroi intérieure (7a) de la cavité ouverte (7) du boîtier d'actionneur.

4. Dispositif d'entraînement selon la revendication 3, dans lequel la paroi intérieure (7a) de la cavité ouverte (7) possède la forme d'une paroi intérieure d'une sphère partielle creuse.

5. Dispositif d'entraînement selon l'une des revendications 2 à 4, dans lequel une seconde extrémité (10b) de l'écrou de broche (10) est reliée au second élément de roulement (13).

6. Dispositif d'entraînement selon l'une des revendications précédentes, dans lequel le premier élément de roulement (12) possède une première ouverture centrale (12b) dans laquelle la première extrémité (10a) de l'écrou de broche (10) est supportée.

7. Dispositif d'entraînement selon l'une des revendications précédentes, dans lequel l'ensemble d'accouplement (14) est accouplé à l'ensemble de roulement (11) de telle sorte que l'ensemble d'accouplement (14) peut tourner autour du premier axe de rotation (X) et du second axe de rotation (Y).

8. Dispositif d'entraînement selon l'une des revendications précédentes, dans lequel l'élément d'engrenage (18) est conçu comme un engrenage extérieur possédant une denture (18a) le long de sa périphérie extérieure et une surface intérieure (18c) possédant au moins une première rainure (18b).

9. Dispositif d'entraînement selon la revendication 8, dans lequel l'au moins une saillie (15a) de l'ensemble d'accouplement (14) fait saillie dans la première rainure (18b) de l'élément d'engrenage (18) pour transmettre un mouvement de rotation de l'élément d'engrenage (18) à l'ensemble d'accouplement (14).

10. Dispositif d'entraînement selon la revendication 9, dans lequel l'au moins une saillie (15a) sur la surface extérieure de l'ensemble d'accouplement (14) est façonnée de telle sorte que l'ensemble d'accouplement (14) peut tourner autour du premier axe de rotation (X) et du second axe de rotation (Y).

11. Dispositif d'entraînement selon l'une des revendications précédentes, dans lequel l'ensemble embrayage (25) est conçu comme un embrayage à friction.

12. Dispositif d'entraînement selon l'une des revendications précédentes, dans lequel l'ensemble embrayage (25) comprend au moins un premier anneau de friction (26) étant relié de manière non rotative à l'ensemble d'accouplement (14) et un second anneau de friction (27) étant relié de manière non rotative à l'écrou de broche (10).

13. Dispositif d'entraînement selon la revendication 12, dans lequel l'ensemble embrayage (25) comprend un moyen de sollicitation (28) permettant de solliciter le premier anneau de friction (26) contre le second anneau de friction (27).

14. Dispositif d'entraînement selon la revendication 13, dans lequel le moyen de sollicitation (28) est conçu comme un ressort hélicoïdal possédant une première extrémité de ressort (28a) et une seconde extrémité de ressort (28b), dans lequel la première extrémité de ressort (28a) s'appuie contre l'ensemble d'accouplement (14) et la seconde extrémité de ressort (28b) s'appuie contre le premier anneau de friction (26).

15. Dispositif d'entraînement selon la revendication 14, dans lequel la première extrémité de ressort (28a) s'appuie contre une paroi intérieure (16b) du second élément d'accouplement (16).
